# EUROPÄISCHE PATENTSCHRIFT

(11) **EP 0 642 880 B1**
(45) Veröffentlichungstag und Bekanntmachung des Hinweises auf die Patenterteilung: **17.04.1996**
(21) Anmeldenummer: 94113872.9
(22) Anmeldetag: 05.09.1994
(51) Int. Cl.: B23Q 3/157

(54) **Werkzeugwechsler für ein Bearbeitungszentrum**
Tool exchanger for a machining centre
Changeur d'outil pour un centre d'usinage

(30) Priorität: 13.09.1993 DE 4331064
(43) Veröffentlichungstag der Anmeldung: 15.03.1995
(73) Patentinhaber: BERNHARD STEINEL WERKZEUGMASCHINENFABRIK GmbH u. Co., D-78056 Villingen-Schwenningen (DE)
(72) Erfinder: Buggle, Günther, D-78056 Villingen-Schwenningen (DE); Schütz, Willi, D-72175 Weiden-Dornham (DE)
(74) Vertreter: Patentanwälte Westphal, Buchner, Mussgnug Neunert, Göhring

(56) Entgegenhaltungen:
- EP-A- 0 411 447
- DE-A- 3 017 613
- DE-A- 3 714 125
- DE-A- 4 009 537
- US-A- 4 654 957

## Beschreibung

Die Erfindung betrifft einen Werkzeugwechsler für ein Bearbeitungszentrum gemäß dem Oberbegriff des Anspruchs 1.

Um die unterschiedlichen Bearbeitungsschritte an einem Werkstück automatisch nacheinander abarbeiten zu können, werden bei Bearbeitungszentren automatische Werkzeugwechsler eingesetzt, die die jeweils benötigten Werkzeuge aus einem Werkzeugmagazin entnehmen, an die Arbeitsspindel transportieren, dort gegen das abgearbeitete Werkzeug austauschen und das abgearbeitete Werkzeug wieder in dem Werkzeugmagazin ablegen. Um eine hohe Flexibilität der Bearbeitungsvorgänge und lange automatische Betriebszeiten zu ermöglichen, sind Werkzeugmagazine mit einer hohen Kapazität erforderlich. Um die Werkzeuge in einfacher Weise und sicher in dem Magazin halten zu können, werden Werkzeugmagazine bevorzugt, in welchen die Werkzeuge mit vertikaler Achse aufgenommen werden. Die Arbeitsspindel des Bearbeitungszentrums ist vorzugsweise horizontal angeordnet, um einen freien Spänefall nach unten zu ermöglichen. Daraus ergibt sich die Notwendigkeit, daß der Werkzeugwechsler die Werkzeuge zwischen dem Werkzeugmagazin und der Arbeitsspindel in der Regel in drei Raumachsen (U-, V-, W-Achse) transportieren und außerdem zwischen der vertikalen Position in dem Werkzeugmagazin und der horizontalen Position in der Arbeitsspindel schwenken muß. Bei bekannten Werkzeugwechslern werden die verschiedenen Bewegungsvorgänge unabhängig voneinander und aufeinanderfolgend durchgeführt. Dementsprechend sind getrennt angesteuerte Antriebe für die einzelnen Bewegungsabläufe vorgesehen. Dadurch werden die bekannten Werkzeugwechsler konstruktiv aufwendig. Der aufeinanderfolgende Ablauf der einzelnen Bewegungsvorgänge verlängert zudem die Werkzeugwechselzeiten.

Ein Werkzeugwechsler der vorstehend genannten Art ist z.B. aus EP-A- 411 447 bekannt
Der Erfindung liegt daher die Aufgabe zugrunde, einen Werkzeugwechsler für ein Bearbeitungszentrum zur Verfügung zu stellen, der mit geringerem konstruktivem Aufwand auskommt und kürzere Werkzeugwechselzeiten ermöglicht.

Diese Aufgabe wird erfindungsgemäß gelöst durch einen Werkzeugwechsler mit den Merkmalen des Anspruches 1.

Vorteilhafte Ausführungsformen der Erfindung sind in den Unteransprüchen angegeben.

Der erfindungsgemäße Werkzeugwechsler weist einen zweiarmigen Greifer auf, der mit einem Arm das neue Werkzeug zuführt und mit dem anderen Arm das abgearbeitete Werkzeug der Arbeitsspindel entnimmt. Der Greifer ist an einem Greiferkopf gelagert, der wiederum mittels eines Hubschlittens in einer der drei Raumachsen verfahrbar ist. Mittels des Hubschlittens wird der Greifer zwischen einer der Arbeitsspindel zugeordneten und einer dem Werkzeugmagazin zugeordneten Stellung bewegt. Der Motor, der den Hubschlitten antreibt, wird dabei auch dazu verwendet, den Greifer um seine Greiferachse zu verschwenken, so daß die beiden Arme des Greifers abwechselnd in die Übergabeposition vor der Arbeitsspindel bzw. in dem Magazin gebracht werden können. Ebenso wird dieser Motor auch dazu verwendet, die Greiferachse zu verschwenken, so daß der Greifer in eine Stellung mit vertikaler Anordnung der Werkzeuge und eine Stellung mit horizontaler Anordnung der Werkzeuge gebracht werden kann. Da für die Hubbewegung des Greifers, für das Schwenken des Greifers um seine Achse und für das Verschwenken der Greiferachse nur ein einziger Motor benötigt wird, verringert sich der konstruktive Aufwand erheblich.

Weiter ist die Schwenkbewegung der Greiferachse zwangsweise mit der Hubbewegung des Hubschlittens gekoppelt, so daß das Schwenken der Greiferachse während der Hubbewegung des Hubschlittens erfolgt. Dadurch wird Werkzeugwechselzeit eingespart. Darüber hinaus ist auch das Schwenken des Greifers um seine Greiferachse teilweise mit der Hubbewegung des Hubschlittens gekoppelt, so daß auch die hierfür benötigten Zeiten zum Teil eingespart werden können.

Im folgenden wird die Erfindung anhand eines in der Zeichnung dargestellten Ausführungsbeispiels näher erläutert. Es zeigen :
- Figur 1: eine Stirnansicht eines Bearbeitungszentrums mit einem Werkzeugwechsler,
- Figur 2: eine Draufsicht auf das Bearbeitungszentrum,
- Figur 3: eine Seitenansicht des Wagens des Werkzeugwechslers mit dem Hubschlitten,
- Figur 4: eine Stirnansicht des Wagens mit dem Hubschlitten,
- Figur 5: einen Schnitt gemäß der Linie V-V in Figur 6,
- Figur 6: einen Schnitt gemäß der Linie Vi-VI in Figur 4,
- Figur 7: eine Seitenansicht des oberen Endes des Hubschlittens in der Ansicht X in Figur 4,
- Figur 8: eine Stirnansicht der Figur 7,
- Figur 9: eine Figur 7 entsprechende Darstellung in einem anderen Funktionszustand und
- Figur 10: einen Schnitt gemäß der Linie X-X in Figur 3.

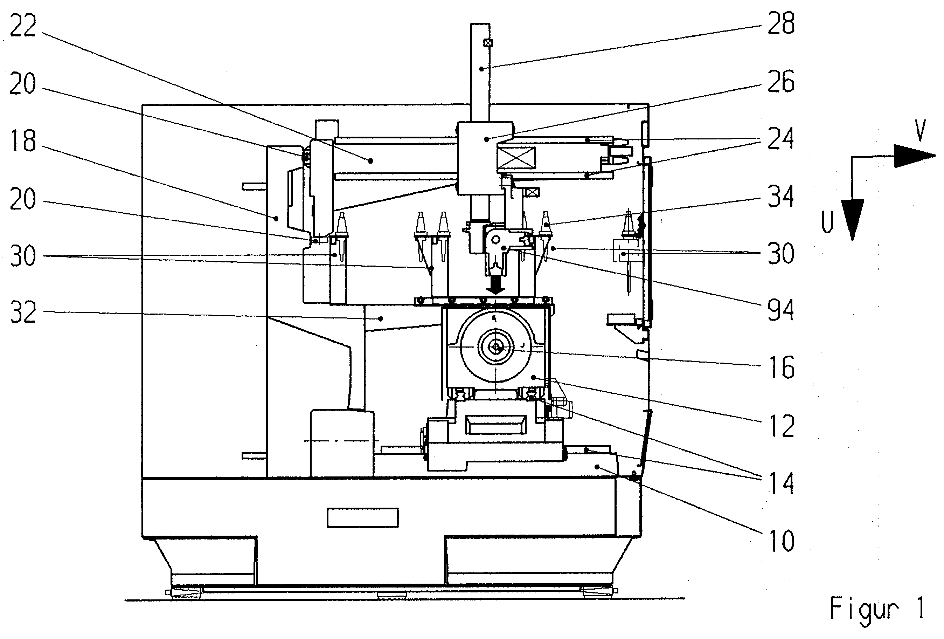

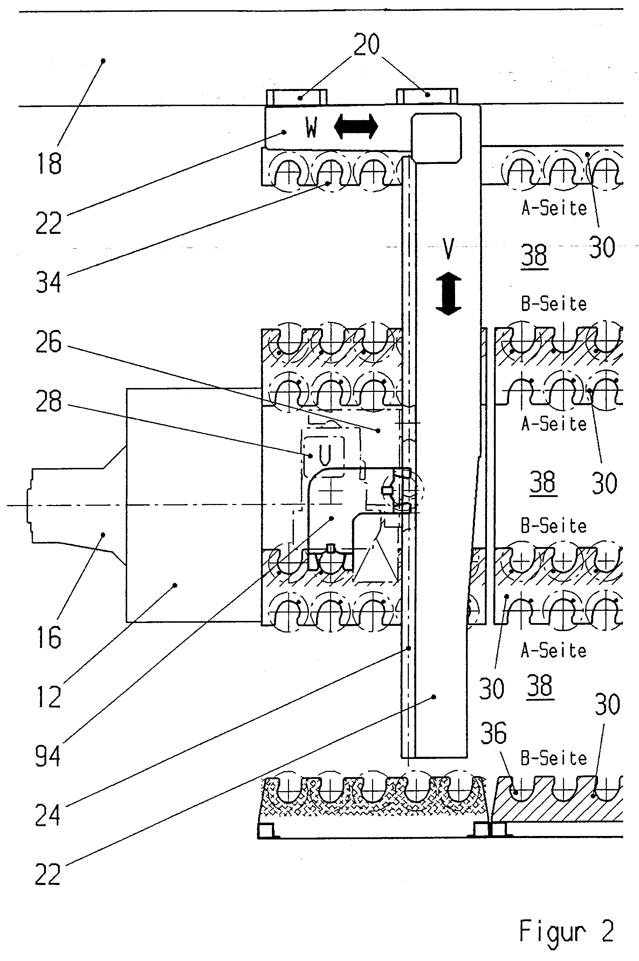

Die Figuren 1 und 2 zeigen ein Bearbeitungszentrum mit einem Maschinenbett 10, auf welchem ein Spindelkasten 12 in Querrichtung (Y-Achse) und in Längsrichtung (Z-Achse) mittels Führungen 14 verschiebbar gelagert ist. In dem Spindelkasten 12 ist die horizontal angeordnete Arbeitsspindel 16 mit einer Werkzeugspanneinrichtung gelagert.

An einer zur Spindel 16 parallelen vertikalen Wand 18 des Maschinengestells sind oberhalb des Spindelkastens 12 in Längsrichtung horizontale Führungen 20 angebracht, in welchen in W-Richtung verfahrbar ein Laufträger 22 gelagert ist. Der Laufträger 22 wird durch einen nicht dargestellten motorischen Antrieb verfahren. Der Laufträger 22 ragt horizontal senkrecht von der Wand 18 über die gesamte Breite des Maschinenbettes 10 ab. In horizontalen Führungen 24 des Laufträgers 22 ist mittels eines nicht dargestellten Antriebsmotors verfahrbar ein Wagen 26 verschiebbar. In dem Wagen 26 ist vertikal verfahrbar ein Hubschlitten 28 gelagert.

Oberhalb und hinter dem Spindelkasten 12 und unterhalb des Laufträgers 22 ist ein Werkzeugmagazin 30 angebracht, das teils auf einer von der Wand 18 vorkragenden Konsole 32 angeordnet ist und teils an einer äußeren Wand des Maschinengehäuses. Das Werkzeugmagazin 30 besteht zweckmäßigerweise aus einzelnen Werkzeugkassetten. Die Werkzeuge 34 sind in dem Werkzeugmagazin mit vertikaler Achse angeordnet und werden in Werkzeugaufnahmen 36 gehalten, die in zur Wand 18 (W-Achse) parallelen Reihen angeordnet sind. Zwischen den Reihen von Werkzeugaufnahmen 36 bleiben Gassen 38 frei, in welche der Werkzeugwechsler einfahren kann.

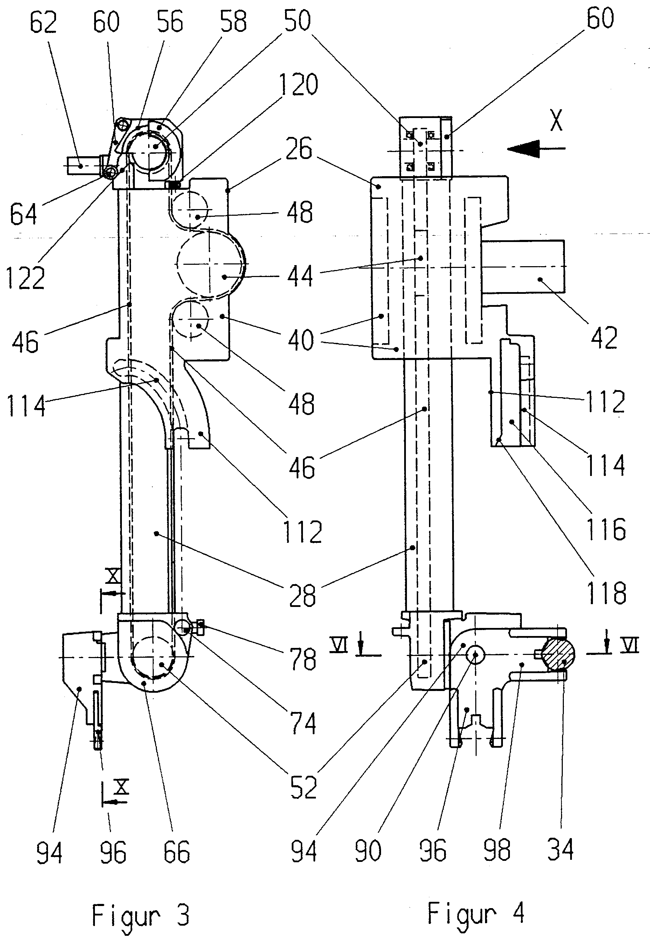

Der Wagen 26 mit dem Hubschlitten 28 ist in den Figuren 3 und 4 näher gezeigt. Der Wagen 26 weist einen Rahmen 40 aus vertikalen Platten auf. Der Rahmen 40 ist in den Führungen 24 des Laufträgers 22 verschiebbar gelagert. Mittels Wälzlagern vertikal in dem Rahmen 40 verschiebbar ist der Hubschlitten 28 gelagert. Der Hubschlitten 28 ist als vertikale Säule ausgebildet, die um einen Hubweg verfahrbar ist, der im wesentlichen dem vertikalen Abstand zwischen der Spindel 16 und der Ebene der Werkzeugaufnahmen 36 des Werkzeugmagazins 30 entspricht.

Außen an dem Rahmen 40 ist ein elektrischer Motor 42 angebracht. Der Motor 42 treibt eine mit horizontaler Achse in dem Rahmen 40 gelagerte Antriebsriemenscheibe 44 an. Ein Zahnriemen 46 ist mittels Umlenkscheiben 48 um die Antriebsriemenscheibe 44 geführt. Der endlos umlaufende Zahnriemen 46 läuft über eine oben in dem Hubschlitten 28 gelagerte obere Riemenscheibe 50 und eine unten in dem Hubschlitten 28 gelagerte untere Riemenscheibe 52.

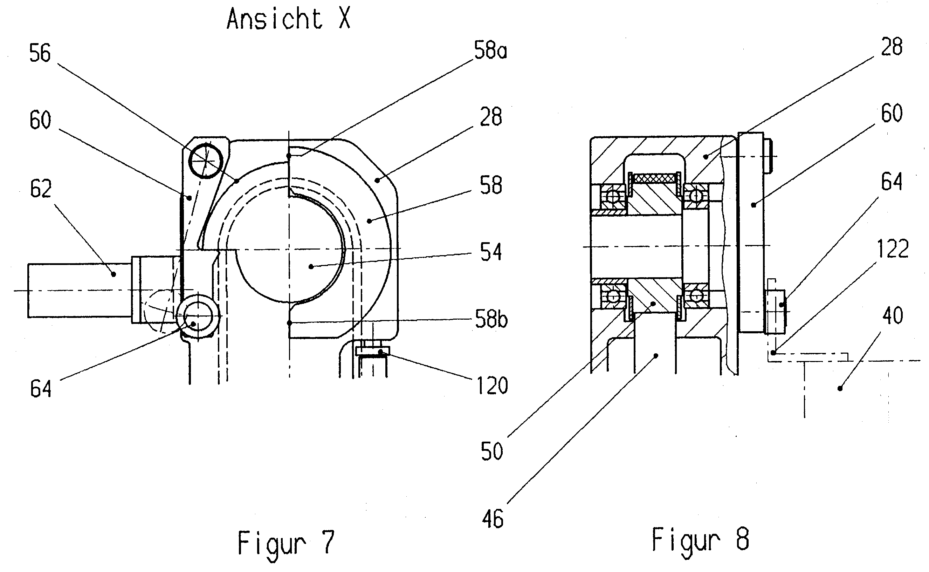

Wie die Figuren 7 bis 9 zeigen, sitzt drehfest auf der Achse der oberen Riemenscheibe 50 eine Sperrscheibe 54, die einen sich über einen Winkel von 90° erstreckenden Sektor 56 mit größerem Radius aufweist. Der Bereich der Sperrscheibe 54 mit dem kleineren Radius wird über einen Umfang von 180° von einem an dem Hubschlitten 28 befestigten Anschlagteil 58 umschlossen, welches einen oberen Anschlag 58a und einen um 180° versetzten unteren Anschlag 58b für den Sektor 56 der Sperrscheibe 54 bildet. Die Drehbewegung der Sperrscheibe 54 und damit der oberen Riemenscheibe 50 ist dadurch auf einen Winkel von 90° beschränkt. Weiter ist oben an dem Schlitten 28 eine Sperrklinke 60 schwenkbar gelagert. Die Sperrklinke 60 wird durch einen pneumatischen Zylinder 62 abgefedert an dem Umfang der Sperrscheibe 54 anliegend gehalten. Die Sperrklinke 60 kann mit einer Nase in die Sperrscheibe 54 hinter dem Sektor 56 einfallen, wenn sich der Sektor 56 an dem oberen Anschlag 58a befindet, wie dies in Figur 7 gezeigt ist. Ist die Sperrklinke 60 in dieser Weise in die Sperrscheibe 54 eingefallen, so wird die Sperrscheibe 54 zwischen der Nase der Sperrklinke 60 und dem oberen Anschlag 58a des Anschlagteils 58 festgehalten, so daß die obere Riemenscheibe 50 drehfest an dem Hubschlitten 28 arretiert ist. Die Sperrklinke 60 kann mittels einer an ihrem freien Ende gelagerten Auflaufrolle 64 aus der Sperrscheibe 54 herausgehoben werden.

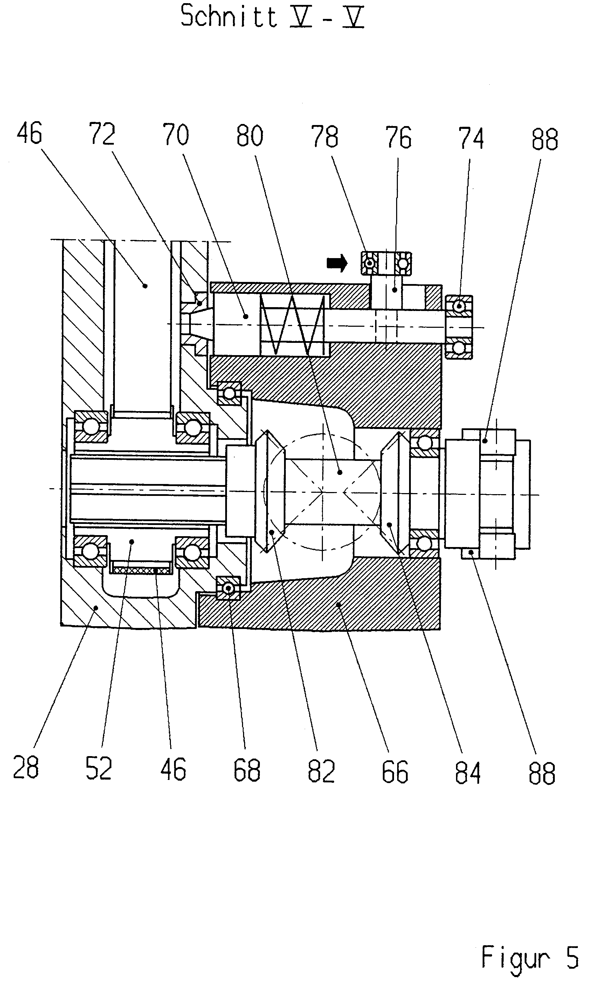

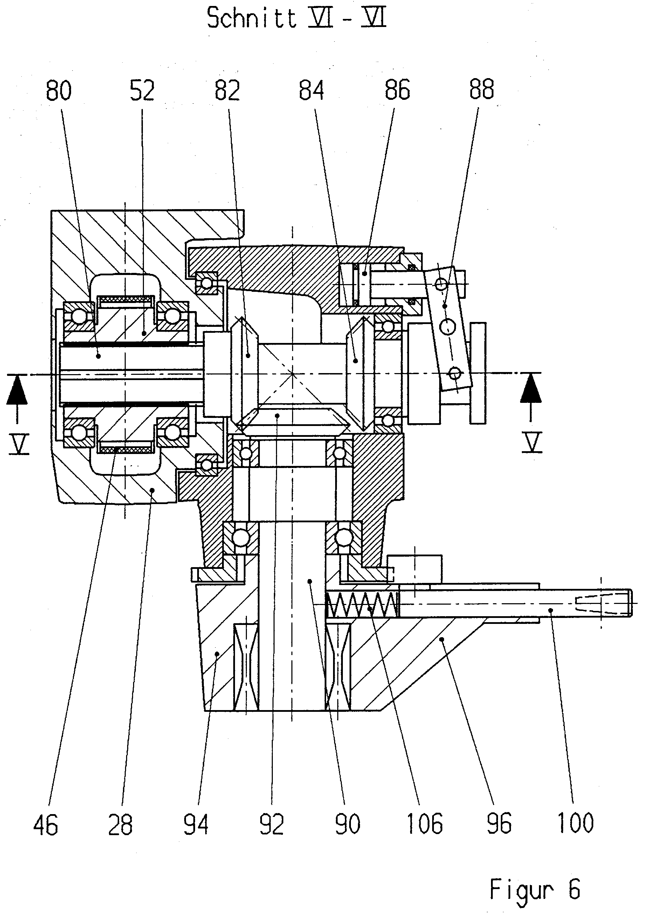

Am unteren Ende des Hubschlittens 28 ist seitlich ein Greiferkopf 66 angebaut. Wie im einzelnen aus den Figuren 5 und 6 ersichtlich ist, ist der Greiferkopf 66 mittels eines Kugellagers 68 drehbar an dem Hubschlitten 28 gelagert, wobei seine Drehachse mit der Achse der unteren Riemenscheibe 52 zusammenfällt. In dem Greiferkopf 66 ist ein zur Drehachse des Greiferkopfes 66 paralleler Indexstift 70 gelagert, der federbelastet in eine Bohrung 72 des Hubschlittens 28 eingreift, um den Greiferkopf 66 drehfest an dem Hubschlitten 28 zu arretieren. Auf dem aus dem Greiferkopf 66 herausragenden Ende des Indexstiftes 70 sitzt eine drehbar gelagerte Kulissenrolle 74. Senkrecht in den Indexstift 70 ist ein Zapfen 76 eingesetzt, der durch ein in Längsrichtung des Indexstiftes 70 verlaufendes Langloch des Greiferkopfes 66 herausragt und auf dessen äußerem aus dem Greiferkopf 66 herausragenden Ende eine Rolle 78 drehbar gelagert ist.

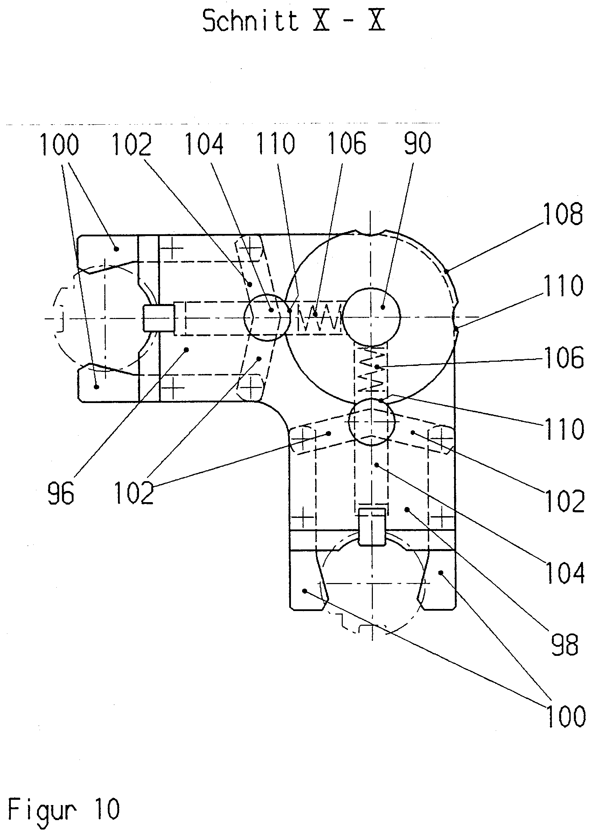

Die mittels Kugellagern in dem Hubschlitten gelagerte untere Riemenscheibe 52 wird axial von einer Keilwelle 80 durchsetzt, die in der unteren Riemenscheibe 52 axial verschiebbar ist und von dieser Riemenscheibe 52 in Drehrichtung formschlüssig mitgenommen wird. Die Keilwelle 80 durchsetzt axial den Greiferkopf 66. In dem Greiferkopf 66 sind auf die Keilwelle 80 zwei Kegelzahnräder 82 und 84 aufgekeilt. Die Kegelzahnräder 82 und 84 sind mit einem kleinen axialen Abstand und mit gegeneinander gerichteter Spitze auf der Keilwelle 80 angeordnet. Die Keilwelle 80 ist mittels eines Fluidzylinders 86 über einen Schwenkhebel 88 axial verschiebbar, wie in Figur 6 dargestellt ist. Senkrecht zu der Keilwelle 80 ist in dem Greiferkopf 66 eine Greiferachse 90 drehbar gelagert. Auf dem inneren Ende der Greiferachse 90 sitzt ein Kegelzahnrad 92, welches je nach der axialen Verschiebungsstellung der Keilwelle 80 entweder mit dem Kegelzahnrad 82 oder mit dem Kegelzahnrad 84 in Eingriff kommt. Außerhalb des Greiferkopfes 66 sitzt auf der Greiferachse 90 ein Greifer 94 mit zwei rechtwinklig zueinander und rechtwinklig zur Greiferachse 90 angeordneten Armen 96 und 98. Wie aus Figur 10 ersichtlich ist, weisen die Arme 96 und 98 jeweils zwei gegeneinander schwenkbare Backen 100 auf. Die freien vorderen Enden der Backen 100 dienen zum Ergreifen der Werkzeuge 34. Die hinteren Enden der Backen 100 sind jeweils über einen Hebel 102 an einen Schieber 104 angelenkt, der mittig radial in den Armen 96 bzw. 98 verschiebbar gelagert ist. Der Schieber 104 wird radial nach außen durch eine Druckfeder 106 belastet, so daß die Hebel 102 die Backen 100 nach Art eines Kniehebels in die Schließstellung gegeneinander schwenken. Das Öffnen der Backen 100 erfolgt gegen die Kraft der Druckfeder 106. Die Schieber 104 stützen sich radial innen am Umfang einer zu der Greiferachse 90 konzentrischen Scheibe 108 ab. Der Radius der Scheibe 108 ist so gewählt, daß die Schieber 104 in der Schließstellung der Backen 100 gehalten werden, so daß die Backen 100 in der Schließstellung formschlüssig arretiert sind. Jeweils um 90° gegeneinander versetzt weist der Umfang der Scheibe 108 Vertiefungen 110 auf. Kommt der Greifer 94 in eine Winkelstellung, in welcher die Schieber 104 in die Vertiefungen 110 gelangen, so können die Schieber 104 gegen die Kraft der Druckfeder 106 nach innen bewegt werden, so daß ein Öffnen der Backen 100 möglich ist.

Wie aus den Figuren 3 und 4 ersichtlich ist, ist an der Unterseite des Rahmens 40 eine Kulissenplatte 112 angebracht. In der Kulissenplatte 112 sind zwei Kulissenbahnen 114 und 116 ausgebildet. Die Kulissenbahnen 114 und 116 führen von einem senkrecht nach unten gerichteten offenen Eintrittsende in einem Viertelkreisbogen nach oben, so daß ihr oberes Ende im wesentlichen horizontal verläuft, wie am deutlichsten in Figur 3 zu erkennen ist. Die beiden Kulissenbahnen 114 und 116 sind in ihrem Profilquerschnitt rechtwinklig zueinander angeordnet, wie am deutlichsten aus Figur 4 ersichtlich ist. Die offenen unteren Eintrittsenden der Kulissenbahnen 114 und 116 sind so angeordnet, daß die Kulissenrolle 74 in die Kulissenbahn 114 und die Rolle 78 in die Kulissenbahn 116 eintreten, wenn der Hubschlitten 28 aus der in den Figuren 3 und 4 gezeigten Stellung nach oben fährt. Die Kulissenbahn 116 für die Rolle 78 des Zapfens 76 weist eine Einlaufschräge 118 auf, die in Figur 4 erkennbar ist. Läuft die Rolle 78 beim Eintritt in die Kulissenbahn 116 über die Einlaufschräge 118, so wird sie in Axialrichtung des Indexstiftes 70 verschoben, so daß der Zapfen 76 den Indexstift 70 gegen die Federkraft aus der Bohrung 72 heraushebt. Dadurch wird der Greiferkopf 66 von dem Hubschlitten 28 entriegelt und drehbar. Laufen die Kulissenrolle 74 und die Rolle 78 bei einer weiteren Aufwärtsbewegung des Hubschlittens 28 in den kreisbogenförmigen Kulissenbahnen 114 bzw. 116, so wird der Greiferkopf 66 entsprechend dem Viertelkreisbogen der Kulissenbahn 114 und 116 um 90° um die Achse der Keilwelle 80 geschwenkt. Dadurch ist ein Schwenken der Greiferachse 90 zwischen einer in den Figuren 3 und 4 gezeigten horizontalen Stellung und einer vertikalen Stellung möglich.

Im folgenden wird die Funktionsweise des Werkzeugwechslers näher erläutert, wobei auch weitere Konstruktionseinzelheiten deutlich werden.

Bei der Beschreibung des Werkzeugwechsel-Zyklus soll zunächst ausgegangen werden von einer Position, bei welcher sich der Hubschlitten 28 in einer oberen Stellung befindet. Der Laufträger 22 und der Wagen 26 sind so verfahren, daß sich der Hubschlitten 28 vor der Spindel 16 befindet.

Der Motor 42 läuft in dem Drehsinn, daß sich die Antriebsriemenscheibe 44 in der Darstellung der Figur 3 im Uhrzeigersinn dreht. Damit würde sich auch die obere Riemenscheibe 50 im Uhrzeigersinn drehen; diese Drehung wird jedoch blockiert, da die mit der oberen Riemenscheibe 50 verbundene Sperrscheibe 54 mit ihrem Sektor 56 an dem Anschlag 58a anliegt, wie dies in Figur 7 dargestellt ist. Da die obere Riemenscheibe 50 blockiert ist, bewirkt der Antrieb der Antriebsriemenscheibe 44 im Uhrzeigersinn, daß der Hubschlitten 28 in dem Rahmen 40 nach unten bewegt wird. Der Greiferkopf 66 nimmt dabei die in den Figuren 3 und 4 dargestellte Position mit horizontaler Greiferachse ein und ist mittels des Indexstiftes 70 an dem Hubschlitten 28 verriegelt. Der Greifer 94 nimmt die aus Figur 4 ersichtliche Position ein, wobei der nach unten gerichtete Arm 96 leer ist, während der waagrechte Arm 98 ein neues Werkzeug hält.

Wenn der Hubschlitten 28 seine unterste Stellung erreicht, wird der leere Arm 96 des Greifers 94 auf das an der Spindel 16 gespannte abgearbeitete Werkzeug geschoben und erfaßt dieses. Die Backen 100 des Armes 96 können dabei gegen die Kraft der Druckfeder 106 auseinandergespreizt werden, um das Werkzeug zu erfassen. Das Werkzeug wird dann zwischen den Backen 100 durch die über die Hebel 102 übersetzte Kraft der Druckfeder 106 gehalten. Nun wird der Spindelkasten 12 in Z-Richtung nach hinten verfahren, so daß das abgearbeitete Werkzeug aus der Spindel 16 herausgehoben wird.

In dieser tiefsten Stellung des Hubschlittens 28, die durch einen Anschlag 120 des Hubschlittens an dem Rahmen 40 definiert ist, läuft die Sperrklinke 60 mit ihrer Auflaufrolle 64 auf einer Auflaufschräge 122 auf, die am oberen Rand des Rahmens 40 angebracht ist. Dadurch wird die Sperrklinke 60 gegen die Federung durch den pneumatischen Zylinder 62 aus der Sperrscheibe 54 herausgehoben, wie in Figur 3 zu erkennen ist.

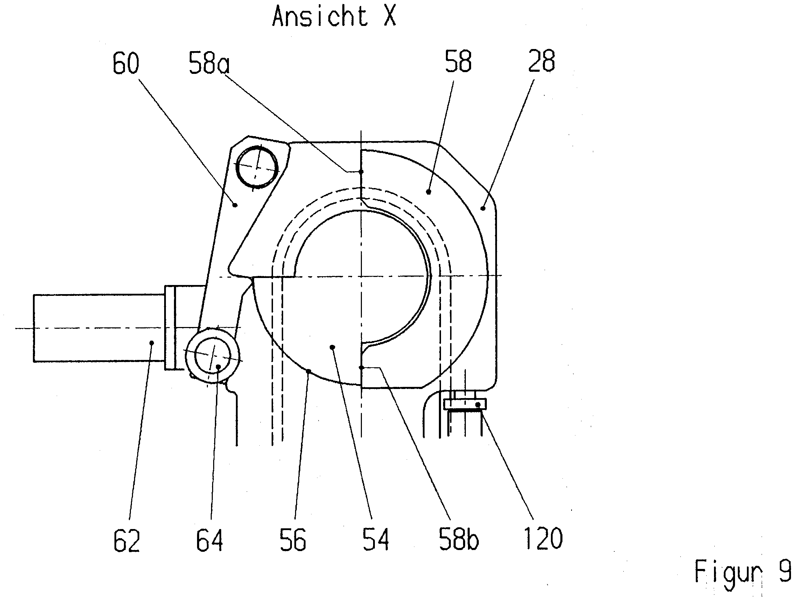

Der Motor 42 wird nun umgeschaltet und treibt die Antriebsriemenscheibe 44 im Gegenuhrzeigersinn an. Der Zahnriemen 46 nimmt nun die obere Riemenscheibe 50 mit, die sich aus der in Figur 3 gezeigten Stellung in die in Figur 9 gezeigte Stellung um 90° drehen kann, bis der Sektor 56 an dem unteren Anschlag 58b zur Anlage kommt. Die Sperrklinke 60 läuft dabei auf dem Außenumfang des Sektors 56. Dieser Drehung der oberen Riemenscheibe 50 um 90° entspricht eine Drehung der unteren Riemenscheibe 52 ebenfalls um 90°. Die Drehung der unteren Riemenscheibe 52 um 90° treibt über die Keilwelle 80, das Kegelzahnrad 82 und das mit diesem in Eingriff stehende Kegelzahnrad 92 die Greiferachse 90 an, da der Greiferkopf 66 an dem Hubschlitten 28 verriegelt ist. Der Greifer 94 wird somit ebenfalls um 90° geschwenkt, so daß nun der Arm 96 mit dem abgearbeiteten Werkzeug horizontal steht und der Arm 98 mit dem neuen Werkzeug 34 nach unten in die Position vor der Spindel 16 gerichtet ist. Nun wird der Spindelkasten 12 wieder nach vorn gefahren, so daß das neue Werkzeug 34 in die Spindel 16 eingesetzt wird. Bei der Schwenkbewegung des Greifers 94 laufen die Schieber 104 der Arme 96 und 98 auf dem Umfang der Scheibe 108, so daß die Backen 100 blockiert sind und ein Herausfallen der Werkzeuge 34 aus dem Greifer 94 bei der Schwenkbewegung ausgeschlossen ist. In der um 90° geschwenkten Stellung des Greifers 94 kommen die Schieber 104 wieder mit den Vertiefungen 110 zur Deckung, so daß die Werkzeuge 34 wieder federnd in den Backen 100 gehalten werden. Der Greifer 94 kann nun nach oben gefahren werden, wobei die Backen 100 des Armes 98 von dem in der Spindel 16 gehaltenen Werkzeug 34 federnd abgezogen werden.

Für die Aufwärtsbewegung des Hubschlittens 28 wird der Motor 42 weiter im Gegenuhrzeigerdrehsinn der Antriebsriemenscheibe 44 angetrieben. Die mit ihrem Sektor 56 an dem unteren Anschlag 58b anliegende Sperrscheibe 54 blockiert dabei die obere Riemenscheibe 50, so daß der Antrieb der Antriebsriemenscheibe 44 zu einem Hochfahren des Hubschlittens 28 führt. Die Sperrklinke 60 kommt dabei von der Auflaufschräge 122 frei, liegt jedoch noch auf dem Sektor 56 der Sperrscheibe 54 auf, wie dies in Figur 9 dargestellt ist.

Wenn sich der Hubschlitten 28 seiner oberen Endstellung nähert, gelangt der Greiferkopf 66 an die Kulissenplatte 112. Zunächst läuft die Rolle 78 des Zapfens 76 auf die Einlaufschräge 118 der Kulissenbahn 116. Dadurch wird der Indexstift 70 aus der Bohrung 72 des Hubschlittens 28 herausgezogen, so daß der Greiferkopf 66 nun gegenüber dem Hubschlitten 28 frei drehbar ist. Bei der weiteren Aufwärtsbewegung läuft die Kulissenrolle 74 des Indexstiftes 70 in der gebogenen Kulissenbahn 114, während die Rolle 78 in der parallelen Kulissenbahn 116 mitläuft. Der Greiferkopf 66 wird dabei um seine mit der Keilwelle 80 zusammenfallende Achse um 90° geschwenkt, bis er am Ende der Schwenkbewegung mit vertikaler Greiferachse 90 stehenbleibt, wenn die Kulissenrolle 74 das waagrechte Ende der Kulissenbahn 114 erreicht hat. Die in dem waagrechten Endabschnitt der Kulissenbahn 114 sitzende Kulissenrolle 74 hält den Hubschlitten 28 in seiner oberen Endstellung.

Bei der Drehung des Greiferkopfes 66 wälzt sich das Kegelzahnrad 92 der Greiferachse 90 an dem über die Keilwelle 80 festgehaltenen Kegelzahnrad 82 ab, so daß die Greiferachse 90 gedreht wird und auch der Greifer 94 um 90° geschwenkt wird. Durch wahlweises Einkuppeln des Kegelzahnrades 82 oder des Kegelzahnrades 84 in das Kegelzahnrad 92 der Greiferachse 90 mittels des Fluidzylinders 86 kann gewählt werden, ob der Greifer 94 um 90° nach rechts oder nach links geschwenkt wird.

In der oberen Endstellung des Hubschlittens 28 befindet sich der Greifer 94 auf der Höhe der Werkzeugaufnahmen 36 des Werkzeugmagazins 30, wobei seine Greiferachse 90 senkrecht nach unten gerichtet ist, die Schwenkebene des Greifers 94 somit horizontal ist. Je nach Schwenkrichtung des Greifers 94 weist dabei der leere Arm 98 in W-Richtung gesehen nach rechts oder nach links, während der Arm 96 mit dem abgearbeiteten Werkzeug in W-Richtung nach vorn oder nach hinten steht.

Mittels des Wagens 26 und des Laufträgers 22 wird der Greifer 94 nun gesteuert in eine der Gassen 38 des Werkzeugmagazins 30 gefahren, bis der leere Arm 98 an die Werkzeugaufnahme 36 gelangt, in welcher das nächste durch das Steuerprogramm aufgerufene Werkzeug 34 abgelegt ist. Die Auswahl der Schwenkrichtung des Greifers 94 mittels der Kegelzahnräder 82 bzw. 84 dient dazu, den leeren Arm 98 des Greifers 94 schon bei der Aufwärtsbewegung des Hubschlittens 28 so zu stellen, daß er auf die Werkzeugaufnahmen 36 der A-Seite oder die Werkzeugaufnahmen 36 auf der gegenüberliegenden B-Seite der Gasse 38 gerichtet ist.

Der Greifer 94 wird nun gegen die ausgewählte Werkzeugaufnahme 36 bewegt, wobei sein leerer Arm 98 das ausgewählte neue Werkzeug ergreift. Das Werkzeug 34 wird aus der Werkzeugaufnahme 36 herausgenommen. Dann wird der Motor 42 wieder in der Drehrichtung eingeschaltet, daß sich die Antriebsriemenscheibe 44 im Uhrzeigersinn dreht. Die obere Riemenscheibe 50 kann sich dabei um einen Winkel von 90° im Uhrzeigersinn drehen, wobei sich der Sektor 56 der Sperrscheibe 54 um 90° aus der in Figur 9 gezeigten Stellung dreht und wieder zum Anschlag an dem oberen Anschlag 58a kommt. Die Sperrklinke 60 kann wieder hinter dem Sektor 56 einfallen, so daß die obere Riemenscheibe 50 wieder blockiert ist, wie dies in Figur 7 dargestellt ist. Bei dieser Drehung der oberen Riemenscheibe 50 um 90° wird je nach Stellung der Keilwelle 80 über das Kegelzahnrad 82 oder das Kegelzahnrad 84 der Greifer 94 um 90° nach rechts oder nach links geschwenkt, so daß nun der Arm 96 mit dem abgearbeiteten Werkzeug auf die Werkzeugaufnahme 36 gerichtet ist, welcher das neue Werkzeug entnommen wurde. Durch Verschieben des Greifers 94 kann das abgearbeitete Werkzeug 34 nun in der freien Werkzeugaufnahme 36 abgelegt werden. Mittels des Wagens 26 und des Laufträgers 22 wird der Hubschlitten 28 nun wieder in seine Position oberhalb und vor der Spindel 16 verfahren. Damit befindet sich das neue Werkzeug in Bereitschaftsstellung für den nächsten Werkzeugwechsel.

Sobald der nächste Werkzeugwechsel durchgeführt werden soll, wird der Hubschlitten 28 abwärts bewegt, wozu der Motor 42 die Antriebsriemenscheibe 44 wieder im Uhrzeigersinn antreibt. Die Sperrscheibe 54 befindet sich in der in Figur 7 gezeigten blockierten Stellung, so daß der Antrieb des Zahnriemens 46 zu einer Abwärtsbewegung des Hubschlittens 28 führt. Bei dieser Abwärtsbewegung wandert die Kulissenrolle 74 wieder in der Kulissenbahn 114 nach unten, wodurch der Greiferkopf 66 wieder aus seiner Stellung mit vertikaler Greiferachse 90 in seine Stellung mit horizontaler Greiferachse 90 geschwenkt wird. Gleichzeitig wird durch das Abwälzen des Kegelzahnrades 92 der Greiferachse 90 auf dem jeweils eingekuppelten Kegelzahnrad 82 bzw. 84 der Greifer 94 um seine Greiferachse 90 so verschwenkt, daß der nun wieder leere Arm 96 nach unten gerichtet ist und der das neue Werkzeug 34 haltende Arm 98 waagrecht steht. Sobald die Kulissenrolle 74 aus der Kulissenbahn 114 ausgetreten ist, läuft die Rolle 78 des Zapfens 76 über die Einlaufschräge 118 der Kulissenbahn 116 heraus, so daß der Indexstift 70 durch Federkraft wieder in die Bohrung 72 eingerückt wird und der Greiferkopf 66 wieder an dem Hubschlitten 28 verriegelt ist. Damit befindet sich der Werkzeugwechsler wieder in dem oben beschriebenen Ausgangszustand des Zyklus.

## Patentansprüche

1. Werkzeugwechsler für ein Bearbeitungszentrum mit horizontaler Arbeitsspindel, mit einem Werkzeugmagazin, in dem die Werkzeuge mit vertikaler Achse angeordnet sind, mit einem in einer zur Arbeitsspindel senkrechten horizontalen Richtung (V-Achse) verfahrbaren Wagen, mit einem in vertikaler Richtung (U-Achse) in dem Wagen verfahrbar gelagerten Hubschlitten, mit einem den Hubschlitten in vertikaler Richtung (U-Achse) antreibenden, in dem Wagen gelagerten Motor, mit einem an dem Hubschlitten schwenkbar gelagerten Greiferkopf und mit einem mit einer Greiferachse schwenkbar in dem Greiferkopf gelagerten zweiarmigen Greifer, wobei der Greifer zwischen Stellungen mit vertikaler und mit horizontaler Anordnung der Werkzeuge bewegbar ist,
dadurch gekennzeichnet,
daß der Wagen (26) in einer zur Arbeitsspindel (16) parallelen horizontalen Richtung (W-Achse) verfahrbar ist, daß der Greiferkopf (66) bei der vertikalen Bewegung des Hubschlittens (28) in eine Kulissenbahn (114) des Wagens (26) läuft und zwischen einer Stellung mit horizontaler und einer Stellung mit vertikaler Greiferachse (90) geschwenkt wird, daß der Motor (42) den Hubschlitten (28) über endlos umlaufende Zugmittel (44, 46, 50, 52) antreibt und daß die Zugmittel (46, 50, 52) umschaltbar die Schwenkbewegung des Greifers (94) um seine Greiferachse (90) antreiben.

2. Werkzeugwechsler nach Anspruch 1, dadurch gekennzeichnet, daß die Arme (96, 98) des Greifers (94) senkrecht zueinander und senkrecht zur Greiferachse (90) angeordnet sind.

3. Werkzeugwechsler nach Anspruch 1 oder 2, dadurch gekennzeichnet, daß der Greiferkopf (66) mit einer Verriegelung an dem Hubschlitten (28) festgelegt ist, die zur Schwenkung des Greiferkopfes (66) lösbar ist.

4. Werkzeugwechsler nach Anspruch 3, dadurch gekennzeichnet, daß die Verriegelung einen in dem Greiferkopf (66) gelagerten Indexstift (70) aufweist, der in den Hubschlitten (28) eingreift und bei der Hubbewegung des Hubschlittens (28) über eine Einlaufschräge (118) aus dem Hubschlitten (28) gehoben wird.

5. Werkzeugwechsler nach Anspruch 1, dadurch gekennzeichnet, daß die Zugmittel einen über eine obere Riemenscheibe (50) und eine untere Riemenscheibe (52) des Hubschlittens (28) umlaufenden Zahnriemen (46) aufweisen.

6. Werkzeugwechsler nach Anspruch 5, dadurch gekennzeichnet, daß eine der Riemenscheiben (50) blockierbar ist, um den Hubschlitten (28) mittels des Zahnriemens (46) anzutreiben, und umschaltbar auf einen begrenzten Drehwinkel ist, um bei stehendem Hubschlitten (28) die Schwenkbewegung des Greifers (94) anzutreiben.

7. Werkzeugwechsler nach Anspruch 6, dadurch gekennzeichnet, daß der Greifer (94) mittels eines auf seiner Greiferachse (90) sitzenden Kegelzahnrades (92) angetrieben wird, welches mit einem Kegelzahnrad (82) in Eingriff steht, das drehfest mit einer der Riemenscheiben (52) verbunden ist.

8. Werkzeugwechsler nach Anspruch 7, dadurch gekennzeichnet, daß mit der Riemenscheibe (52) eine axial verschiebbare Keilwelle (80) drehfest verbunden ist und daß auf der Keilwelle (80) zwei mit der Spitze gegeneinander gerichtete, axial beabstandete Kegelzahnräder (82 und 84) befestigt sind, die durch axiale Verschiebung der Keilwelle (80) wahlweise mit dem Kegelzahnrad (92) der Greiferachse (90) in Eingriff gebracht werden können, um die Schwenkrichtung des Greifers (94) festzulegen.

9. Werkzeugwechsler nach einem der vorhergehenden Ansprüche, dadurch gekennzeichnet, daß das Werkzeugmagazin (30) in einer horizontalen Ebene oberhalb der Arbeitsspindel (16) angeordnet ist und aus in zur Achse der Arbeitsspindel (16) parallelen Reihen angeordneten Werkzeugaufnahmen (36) besteht, zwischen denen Gassen (38) zum Einfahren des Greifers (94) freibleiben.

## Claims

1. A tool changing device for a machining centre having a horizontal work spindle, having a tool store in which the tools are disposed with axes vertical, having a carriage movable in a horizontal direction perpendicular to the work spindle (V-axis), having a lifting slide movably mounted in the carriage in the vertical direction (U-axis), having a motor driving the lifting slide in the vertical direction (U-axis) and mounted in the carriage, having a gripper head pivoted on the lifting slide and having a two-arm gripping device pivoted to the gripper head by a gripping device arbor, whereby the gripping device can be moved between positions with vertical and with horizontal arrangement of the tools,
**characterised in that** the carriage (26) can be moved in a horizontal direction (W-axis) parallel to the work spindle (16),
**in that** the gripper head (66) moves into a slide track (114) of the carriage (26) with the vertical movement of the lifting slide (28) and is swivelled between a position with horizontal and a position with vertical gripping device arbor (90),
**in that** the motor (42) drives the lifting slide (28) via endlessly rotating traction means (44, 46, 50, 52), **and in that** the traction means (46, 50, 52) reversibly drive the swivel movement of the gripping device (94) around its gripping device arbor (90).

2. A tool changing device according to Claim 1, **characterised in that** the arms (96, 98) of the gripping device (94) are disposed perpendicularly to one another and perpendicularly to the gripping device arbor (90).

3. A tool changing device according to Claim 1 or 2, **characterised in that** the gripper head (66) is fixed to the lifting slide (28) with a locking device which is detachable for the swivelling of the gripper head (66).

4. A tool changing device according to Claim 3, **characterised in that** the locking device comprises an index pin (70) mounted in the gripper head (66), which engages in the lifting slide (28) and during the lifting movement of the lifting slide (28) is raised via an entry slope (118) out of the lifting slide (28).

5. A tool changing device according to Claim 1, **characterised in that** the traction means comprise a toothed belt (46) revolving over an upper pulley (50) and a lower pulley (52) of the lifting slide (28).

6. A tool changing device according to Claim 5, **characterised in that** one of the pulleys (50) can be locked in order to drive the lifting slide (28) by means of the toothed belt (46), and is reversible over a limited angle of rotation in order to drive the swivel movement of the gripping device (94) when the lifting slide (28) is stationary.

7. A tool changing device according to Claim 6, **characterised in that** the gripping device (94) is driven by means of a bevel gear (92) seated on its gripping device arbor (90), which gear is in engagement with a bevel gear (82) connected in a rotationally secure manner with one of the pulleys (52).

8. A tool changing device according to Claim 7, **characterised in that** an axially displaceable splined shaft (80) is connected in a rotationally secure manner to the pulley (52),
**and in that** two axially spaced bevel gears (82 and 84) with their points directed towards one another are attached to the splined shaft (80), which gears can be selectively brought into engagement with the bevel gear (92) of the gripping device arbor (90) by axial displacement of the splined shaft (80) in order to determine the swivelling direction of the gripping device (94).

9. A tool changing device according to one of the preceding Claims,
**characterised in that** the tool store (30) is disposed in a horizontal plane above the work spindle (16) and consists of tool holding fixtures (36) disposed in rows parallel to the axis of the work spindle (16), between which channels (38) remain free for the introduction of the gripping device (94).

## Revendications

1. Changeur d'outils pour centre d'usinage à broche horizontale comportant un magasin d'outilss logeant des outilss de manière verticale, un chariot mobile dans une direction horizontale (axe V) perpendiculaire à la broche, un traîneau mobile sur le chariot dans une direction verticale (axe U), un moteur porté par le chariot et entraînant le traîneau dans la direction verticale (axe U), une tête de préhension pivotante portée par le traîneau et une pince à deux bras montée par l'axe de préhension, de manière pivotante dans la tête de préhension, la pince pouvant se déplacer entre deux positions avec l'outils disposé verticalement et horizontalement,
caractérisé en ce que,
le chariot (26) est mobile dans une direction horizontale (axe W) parallèle à la broche (16), la tête de préhension (36) circule dans un chemin à coulisse (114) du chariot (26) lors du mouvement vertical du traîneau (28) et bascule entre une position avec l'axe de préhension (90) horizontal et une position avec cet axe vertical, le moteur (42) entraînant le traîneau (28) par l'intermédiaire d'un moyen de traction circulant sans fin (44, 46, 50, 52) et le moyen de traction (46, 50, 52) commutable entraînant le mouvement de basculement de la pince (94) autour de son axe de préhension (90).

2. Changeur d'outils selon la revendication 1, caractérisé en ce que les bras (96, 98) de la pince (94) sont perpendiculaires entre eux et par rapport à l'axe de préhension (90).

3. Changeur d'outils selon la revendication 1 ou 2, caractérisé en ce que la tête de préhension (66) est fixée par un verrouillage au traîneau (28) et ce verrouillage peut s'ouvrir pour permettre à la tête de préhension (66) de basculer.

4. Changeur d'outils selon la revendication 3, caractérisé en ce que le verrouillage comporte une broche d'indexage (70) prévue dans la tête de préhension (66), cette broche pénétrant dans le traîneau (28) et lors du mouvement de soulèvement du traîneau (28) cette broche est dégagée du traîneau (28) par une rampe d'entrée (118).

5. Changeur d'outils selon la revendication 1, caractérisé en ce que les moyens de traction comprennent une courroie crantée (46) passant sur une poulie à courroie supérieure (50) et une poulie à courroie inférieure (52) du traîneau (28).

6. Changeur d'outils selon la revendication 5, caractérisé en ce que l'une des poulies à courroie (50) peut se bloquer pour entraîner le traîneau (28) à l'aide de la courroie crantée (46) et peut commuter sur un angle de pivotement limité pour que lorsque le traîneau (28) est fixe, pouvoir entraîner le mouvement de pivotement de la pince (94).

7. Changeur d'outils selon la revendication 6, caractérisé en ce que la pince (94) est entraînée à l'aide d'une roue conique dentée (92) portée par son axe de préhension (90), cette roue dentée étant en prise avec une roue dentée conique (82) solidaire en rotation de l'une des poulies à courroie (52).

8. Changeur d'outils selon la revendication 7, caractérisé en ce qu'un arbre cannelé (80) est relié solidairement en rotation mais coulissant axialement à la poulie à courroie (52) et cet arbre cannelé (80) porte solidairement deux roues coniques dentées (82 et 84) écartées axialement, dont les sommets sont dirigés l'un vers l'autre, ces roues dentées arrivant en prise, sélectivement par coulissement axial de l'arbre cannelé (80) avec la roue dentée conique (92) de l'axe de préhension (90) pour choisir le sens de pivotement de la pince (94).

9. Changeur d'outils selon l'une des revendications précédentes, caractérisé en ce que le magasin à outilss (30) est situé dans un plan horizontal au-dessus de la broche (16) et se compose de logements à outilss (36) répartis en rangées parallèles par rapport à l'axe de la broche (16), rangées entre lesquelles subsistent des couloirs (38) pour le passage de la pince (94).
